Europäisches Patentamt

European Patent Office

Office européen des brevets

(11) Numéro de publication : **0 236 242 B1**

(12) **FASCICULE DE BREVET EUROPEEN**

(45) Date de publication du fascicule du brevet :
**11.12.91 Bulletin 91/50**

(51) Int. Cl.⁵ : **A22C 21/00**

(21) Numéro de dépôt : **87420029.8**

(22) Date de dépôt : **02.02.87**

(54) **Installation de découpe automatique des membres de volailles et animaux similaires.**

(30) Priorité : **31.01.86 FR 8601657**

(43) Date de publication de la demande :
**09.09.87 Bulletin 87/37**

(45) Mention de la délivrance du brevet :
**11.12.91 Bulletin 91/50**

(84) Etats contractants désignés :
**AT BE CH DE ES GB GR IT LI NL SE**

(56) Documents cités :
**EP-A- 0 033 177
EP-A- 0 084 918
WO-A-86/06587
US-A- 2 807 046
US-A- 3 639 945
US-A- 3 943 600
US-A- 4 150 374
US-A- 4 589 165**

(73) Titulaire : **Bruyere, Jean Claude
4 bis, Avenue Paccard
F-42340 Veauche (FR)**
Titulaire : **Lach, Pierre
15 Boulevard Etienne Peronnet
F-42140 Chazelles Sur Lyon (FR)**

(72) Inventeur : **Bruyere, Jean Claude
4 bis, Avenue Paccard
F-42340 Veauche (FR)**
Inventeur : **Lach, Pierre
15 Boulevard Etienne Peronnet
F-42140 Chazelles Sur Lyon (FR)**
Inventeur : **Mollanger, Marius
Route de Lyon
F-42140 Chazelles Sur Lyon (FR)**

(74) Mandataire : **Dupuis, François
Cabinet Laurent et Charras 3, place de
l'Hôtel-de-Ville
F-42000 Saint-Etienne (FR)**

## Description

L'invention concerne une installation de découpe automatique des membres de volailles et animaux similaires.

L'objet de l'invention se rattache au secteur technique des dispositifs de traitement des animaux comestibles.

Le marché de la volaille est de plus en plus orienté vers la fourniture de morceaux tous prêts, en particulier des cuisses de poulets et autres animaux du même genre. Cela a amené les fabricants de machines et chaînes automatiques de traitement de ces animaux, à prévoir des moyens de découpe automatique des membres par rapport à la carcasse.

On connaît notamment une solution qui consiste à sélectionner par lots et préalablement, les volailles plumées en fonction de leur grosseur, puis à les disposer sur des chaînes automatiques en vue de la coupe des ailes et des cuisses à l'aide de scies circulaires placées de part et d'autres des moyens de suspension et de transfert des volailles. Dans ce cas, lorsqu'on veut traiter des animaux de grosseurs différentes, il faut alors régler manuellement les scies.

On comprend que la sélection des animaux suivant leur grosseur et les réglages manuels des scies ne permettent pas d'obtenir un rendement important et nécessitent des interventions humaines dans la chaîne, d'où un coût élevé.

Un autre inconvénient réside dans le fait que les dispositifs de coupe sont mal adaptés pour couper dans les meilleures conditions les ailes et les cuisses de volailles par un positionnement inapproprié, ce qui entraîne des pertes non négligeables de matière consommable, celle-ci restant attachée à la carcasse de la volaille.

D'autre part, sur une machine traditionnelle, la cadence est liée aux possibilités de chargement d'une personne (1 000 à 1 200 volailles/heure). Un tel dispositif est connu par le document US-A-3943600 et comporte les caractéristiques du préambule de la revendication 1.

Le but recherché selon l'invention était donc de remédier aux inconvénients précités, de permettre un traitement automatique des volailles sans tri préalable en minimisant les pertes de matières consommables. Un autre but de l'invention était de réaliser une chaîne automatique de traitement et de découpe des membres de la volaille ainsi que d'autres opérations intermédiaires sans intervention manuelle.

Un autre but de l'invention était de permettre une cadence de travail proportionnelle au nombre de personnes qui chargent, donc limitée seulement par les possibilités de l'installation.

Une telle installation est définie par les caractéristiques de la partie caractérisante de la revendication 1.

Selon une première caractéristique de l'invention, l'installation comporte des palettes à griffes de suspension et de maintien permettant de présenter les volailles aux différents postes opératoires de découpe de sorte que leur axe ventre-dos soit perpendiculaire au sens de défilement de la chaîne de convoyage ; et en ce qu'elle comporte un ou des ensembles de découpes comprenant chacun deux moyens de coupe orientés angulairement et de manière symétrique par rapport à un plan perpendiculaire au sens de défilement de la chaîne de convoyage, lesdits ensembles de découpes assurant la découpe des ailes de la volaille, lesdits ensembles de découpes assurant le tranchage de la volaille à l'articulation entre les cuisses, avant-cuisses et la carcasse en pénétrant par le côté ventral de la volaille ; et en ce qu'elle comporte un ou plusieurs moyens de détection disposés sur le bâti de la chaîne de convoyage avant le ou les ensembles de découpes identifiant l'arrivée de chaque volaille, et de mesure identifiant les caractéristiques propres de poids et/ou de volume de chaque volaille, lesdits moyens de détection et de mesure transmettant leurs informations aux dispositifs de découpes des ailes et des cuisses, ceux-ci adaptant la position suivant plusieurs axes des moyens de coupe en égard des parties de la volaille à découper ; et en ce qu'elle comporte des moyens assurant l'évacuation des ailes de la carcasse et des cuisses, disposés en-dessus des postes de découpe.

Ces caractéristiques et d'autres encore ressortiront bien de la suite de la description.

Pour fixer l'objet de l'invention sans toutefois le limiter dans les dessins annexés,

la figure 1 est une vue en plan de l'installation suivant l'invention,

la figure 2 est une vue de face correspondant à la figure 1,

les figures 3 à 12 montrent respectivement et par paires, des vues en plan et de profil à caractère très schématique, des différentes opérations de traitement des volailles.

les figures 13 et 14 sont des vues illustrant à titre complémentaire la détection et définition des différents paramètres concernant chaque volaille à découper.

Afin de rendre plus concret l'objet de l'invention, on le décrit maintenant d'une manière non limitative en se référant aux exemples de réalisation des figures des dessins.

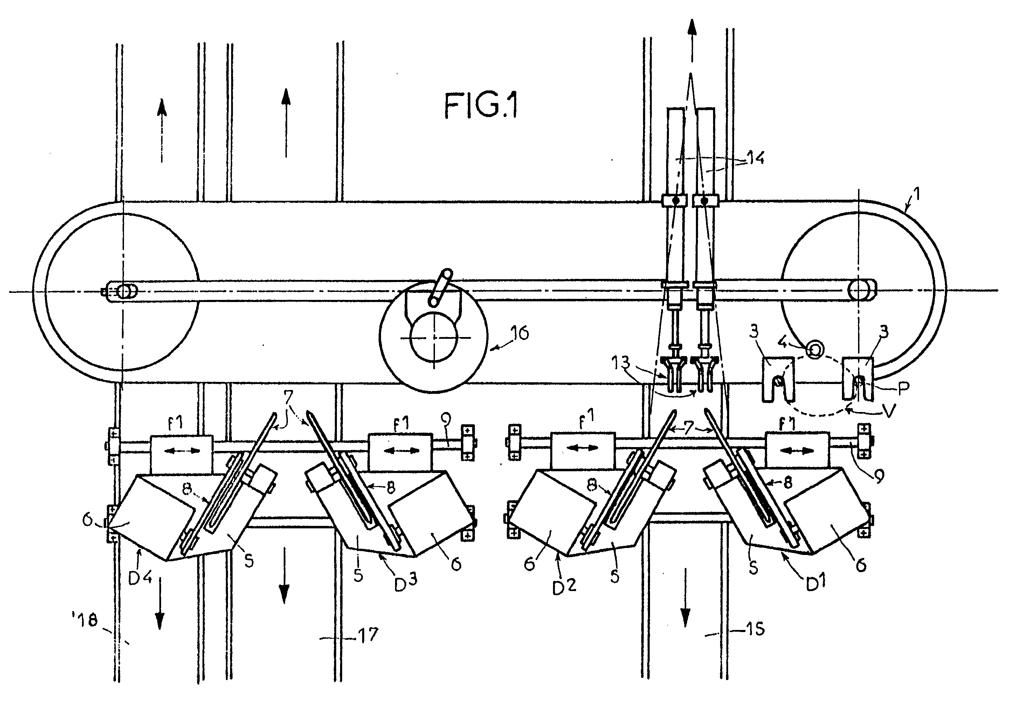

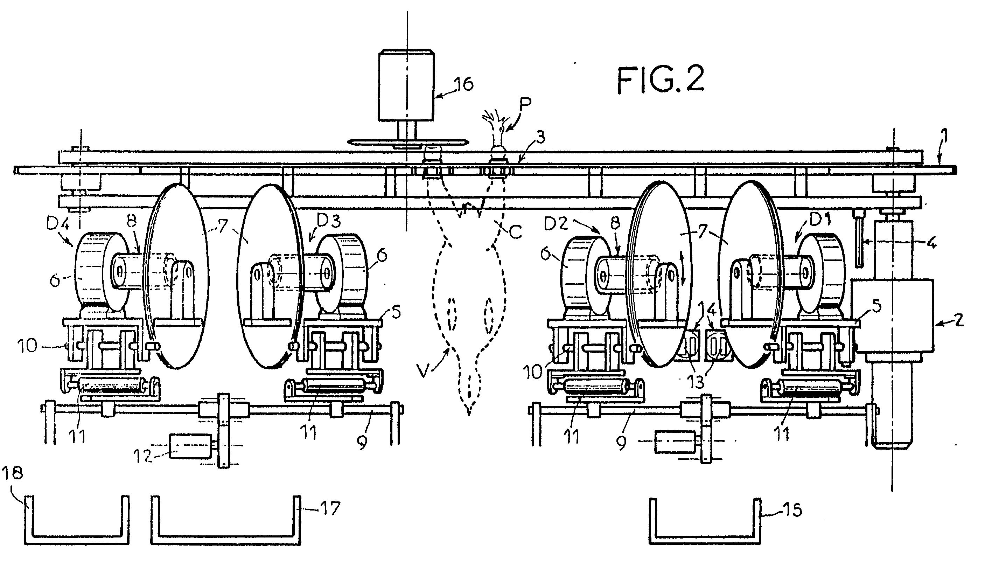

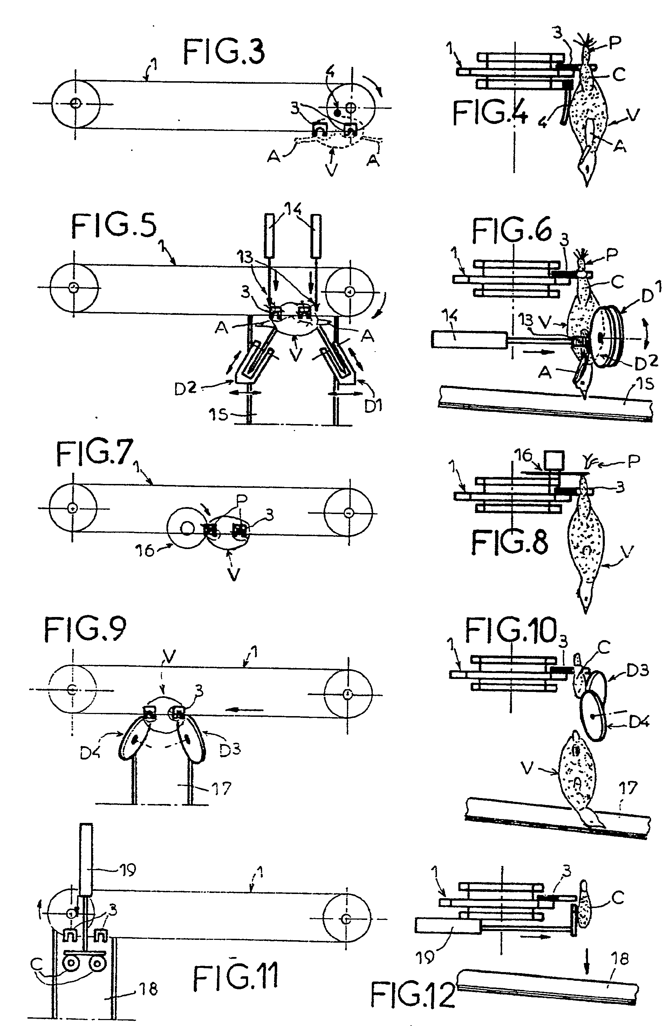

Selon la mise en oeuvre illustrée aux figures 1 et 2, l'installation présente une chaîne sans fin à palettes (1), à griffes ou autres, dont l'avance pas à pas est donnée par un ensemble moteur-réducteur (2) débrayable et à variation de fréquence, assurant d'une manière non limitative, une capacité de travail de 100 à 2 000 volailles par heure.

Selon une réalisation pratique de l'installation, compte-tenu de facteurs d'encombrement, la chaîne est établie sous la forme d'un anneau aplati de telle sorte que la zone arrière corresponde par exemple à la zone de chargement et la zone avant à celle de découpe de la volaille. Sans sortir du cadre de l'invention, la chaîne peut être linéaire ou présenter une autre configuration, par exemple, elle peut prendre des directions à angle variable pour une meilleure adaptation dans les ateliers de découpe existants.

Sur la chaîne sont disposées à intervalles réguliers, des paires de palettes à griffes (3) formant étriers, dans lesquelles sont accrochées en suspension les volailles (V) au niveau des articulations inférieures des cuisses ; lesdites volailles étant disposées de face et parallèlement au sens de défilement. Des moyens assurent le serrage et le maintien en position de la volaille suspendue en coopération avec lesdites griffes. Les griffes (3) de maintien des volailles peuvent être fixées deux par deux sur un disque solidaire de la chaîne par un axe. Par des moyens appropriés, ce disque peut pivoter de façon que la volaille ait son axe ventre/dos dans le sens du déplacement. Les griffes (3) peuvent être hautes et éventuellement articulées, ce qui peut aussi permettre, dans certain cas, de coucher la volaille sur un tapis lors de son déplacement, le tapis se déplaçant en même temps que la chaîne. A noter également que l'on peut modifier l'écartement des palettes pour moduler l'écartellement de la volaille en vue d'opérations particulières. Selon une disposition avantageuse, il n'est pas nécessaire que les pattes des volailles aient été préalablement sectionnées.

Le chargement peut être effectué en un ou plusieurs endroits, tout au long de la partie arrière de la chaîne.

Selon une caractéristique importante de l'invention, l'installation permet un traitement de volailles de poids très variables sans qu'il y ait un tri préalable. La machine est donc équipée de moyens susceptibles de détecter la volaille sur le convoyeur, d'en mesurer les différentes caractéristiques en particulier le volume et/ou le poids de manière que les organes de coupe des ailes et des cuisses soient placés en position appropriée en vue de la découpe des membres de la volaille dans les conditions d'optimisation en réduisant la perte de matière consommable.

Il existe en effet, une étroite corrélation entre le poids de la volaille et son volume en particulier au niveau de ses flancs.

L'invention consiste ainsi à mesurer et obtenir différentes informations sur chaque volaille qui seront traitées pour commander la position des outils de coupe.

Les moyens de détection sont disposés à des endroits stratégiques de la chaîne de convoyage avant les postes de découpes des membres de la volaille. Etant considéré qu'il y a des postes de découpe différents pour les ailes et les cuisses, on peut avoir soit un seul moyen de détection, ou un ou plusieurs moyens de détection avant chaque poste. Ce ou ces moyens de détection sont éloigné de un ou de plusieurs pas par rapport au poste de découpe, il suffit de programmer leur emplacement par rapport audit poste pour que les données enregistrées et communiquées au dispositif de coupe soient très exactement celles de la volaille détectée et contrôlée.

Le ou les moyens de détection se présentent sous la forme de sondes, ou capteurs, ou cellules photo-électriques ultrasons et tous moyens susceptibles d'identifier et de mesurer les paramètres préalablement choisis concernant les volailles. La mesure peut se faire par un contact direct avec la volaille, ou à distance.

Selon un exemple de réalisation non limitatif, le moyen de détection (4), fixé au bâti dans le champ de déplacement des volailles est une sonde flexible susceptible de venir en contact direct avec le corps ou carcasse de la volaille. L'appui peut se faire au niveau du cou ou jabot, au niveau de l'abdomen, au niveau des cuisses ou toute autre zone. Cette sonde fixée en un point du bâti est disposée de telle sorte que la volaille acheminée par le convoyeur vienne en contact avec elle en la déformant (figure 4). Cette déformation enregistrée est plus ou moins importante selon la grosseur de la volaille. Il est bien évident que le poste de détection peut comprendre une ou plusieurs sondes susceptibles d'effectuer des mesures différentes et complémentaires pour une même volaille.

Les déformations enregistrées par les sondes sont transmises par tout moyen approprié, soit directement aux ensembles de découpe (D1-D2)soit à une armoire de programmation. Celle-ci a au préalable en mémoire, un certain nombre de données théoriques qui seront comparées aux mesures effectuées, puis un ordre de commande sera adressé aux ensembles de découpes pour leur positionnement suivant différents axes.

Les ensembles de découpe (D1-D2,), situés au pas suivant, par exemple, sont orientés angulairement de manière symétrique de part et d'autre de la volaille. Ces ensembles comprennent un support (5) pour un moteur (6) d'entraînement de scies circulaires (7) par l'intermédiaire d'une transmission (8). Lesdits ensembles sont montés en translation (flèches F1) sur des guides parallèles (9) et sont orientables angulairement en (10). Leur mouvement d'avance et de recul est obtenu par des vérins pneumatiques ou électriques (11) double effet et le réglage en position des scies, selon les indications des moyens de détection ou de la mémoire centrale est fourni par un moteur-frein et un système vis-écrou (12).

Simultanément au réglage automatique de position de l'ensemble de découpe des ailes, des pinces de préhension (13) situées sensiblement dans un plan perpendiculaire à la ligne de convoyage et associées à des vérins pneumatiques (14) orientables, avancent pour saisir les ailes (A) de la volaille, les écarter pour faciliter l'introduction des couteaux et ainsi immobiliser lesdites volailles pendant leur découpe. Celle-ci s'effectue grâce aux réglages précités au plus près en réduisant au maximum toute perte de matière consommable.

Après la découpe des ailes, les pinces relâchent les ailes qui tombent dans tout moyen d'évacuation tel que goulotte (15), convoyeur, tapis roulant...

La chaîne est de nouveau entraînée pour amener la volaille vers un poste intermédiaire disposé entre les postes de découpe. Ce poste intermédiaire fonctionne dans le cas où la volaille a été positionnée sur la chaîne de découpe préalablement avec ses pattes.

Ce poste intermédiaire se trouve disposé dans un plan sensiblement au-dessus du convoyeur et comprend une scie circulaire (16) réglable en hauteur, qui tranche les pattes (P) de la volaille dépassant au-dessus des griffes. Puis la volaille toujours suspendue, arrive au niveau d'un deuxième poste de découpe qui comprend une paire d'ensembles de découpe (D3-D4) identique au premier, afin de trancher les volailles à l'articulation entre les cuisses, avant-cuisses (C) et la carcasse, en agissant en pénétrant par le côté ventral de la volaille et débordant au plus près au niveau de l'os supérieur médian de la carcasse minimisant les pertes de matière consommable.

Ces ensembles (D3-D4) sont réglables en position soit simultanément avec les ensembles (D1-D2), soit après détection et mesure complémentaire avec d'autres sondes ou moyens équivalents disposés entre la scie circulaire (16) et les ensembles (D3-D4), ou les différents postes de découpe si la machine n'est pas équipée du poste de découpe des pattes.

A ce second poste de découpe des membres, les carcasses détachées des cuisses tombent également dans une goulotte (17) ou autre moyen d'évacuation, tandis que les cuisses, avant-cuisses toujours suspendues aux griffes sont évacuées au pas suivant dans une autre goulotte (18) par tout moyen éjecteur (19) en vue de leur conditionnement ou autre traitement.

On a représenté schématiquement aux figures 3 à 12, les diverses opérations précitées que l'on rappelle succintement :

– Après chargement, arrêt de la chaîne et détection et mesure de la grosseur de la volaille avec transmission des données directement ou indirectement aux ensembles (D1-D2) de découpe des ailes (figures 3 et 4) ;
– au pas suivant, ou autre selon le cycle préétabli, mise en position automatique des ensembles de découpe (D1-D2), préhension et écartement des ailes par les pinces (13) et découpe des ailes (figures 5 et 6) ;
– tranchage des pattes par la scie circulaire (16) en continu (figures 7 et 8) ;

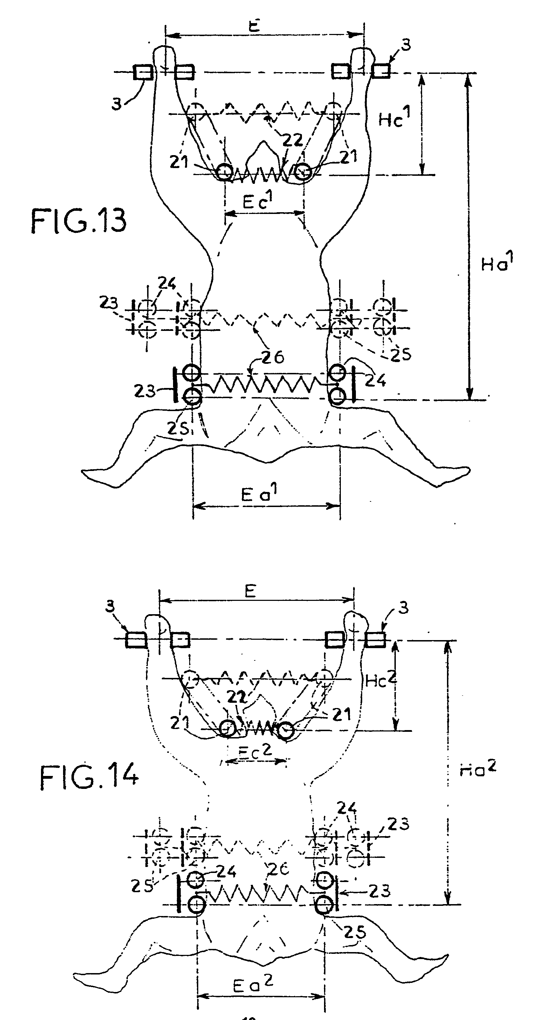

– détection complémentaire éventuelle des volailles pour la découpe des autres parties des membres,
– tranchage de la carcasse par rapport aux cuisses, avant-cuisses, après arrêt de la chaîne au niveau des ensembles (D3-D4) de découpe (figures 9 et 10) ;
– éjection des cuisses en fin de chaîne (figures 11 et 12).

On a représenté aux figures 13 et 14 des moyens complémentaires de détection et de contrôle des différents paramètres de chaque volaille (taille, grosseur, poids) en localisant les points de découpe des cuisses et des ailes.

On décrit le dispositif relatif à la découpe des cuisses.

Des sondes sont associées à des rouleaux (21) qui se déplacent et compriment légèrement la chair de la volaille jusqu'à une pression tarée. Les rouleaux ou galets ou autres moyens assurant les mêmes fonctions, associés aux sondes permettent de localiser avec précision d'une façon personnalisée l'endroit de coupe compte tenu que la grosseur du tronc du poulet n'est pas toujours une mesure suffisante pour couper des ailes ou cuisses au bon endroit, car, suivant leur souche ou race d'origine les poulets sont ramassés, longs, courts... Les volailles sont suspendues, comme indiqué précédemment sur les griffes d'accrochage. Deux rouleaux montés sur un support approprié se déplacent de haut en bas, ils longent les faces internes des cuisses pour arriver de part et d'autre du croupion, ces rouleaux s'arrêtent dès que la résistance offerte par la chair de la volaille est suffisante (préréglage). La course de ces galets qui se fait de haut en bas par rapport aux crochets détermine une distance HC1, HC2, d'autre part l'entraxe des deux rouleaux (variable suivant la volaille) est noté EC1, EC2. Les deux paramètres sont mémorisés puis l'information est envoyée aux éléments de coupe qui vont sectionner aux endroits précis de détection. E est l'entraxe entre les griffes d'accrochage.

Afin de conserver un maintien ferme mais souple des rouleaux contre les faces internes des cuisses de la volaille, lesdits rouleaux sont liés entre eux par un moyen élastique (22) de rappel du type ressort comprimé.

Concernant la découpe des ailes, la volaille est toujours suspendue par les pattes. Deux plaques (23) comportant chacune des rouleaux parallèles (24 - 25) (tournant fous autour d'un axe pour mieux glisser sur la peau) viennent prendre l'épaisseur du torse de la volaille : cette mesure donne un écartement par rapport à l'axe EA1, EA2. Ensuite ces plaques descendent simultanément et en parallèle par un moyen approprié, le long du torse pour venir s'arrêter sous les ailes : l'arrêt est obtenu lorsqu'on atteint une certaine pression de contact préréglée. Le but de cette pression est de s'affranchir des déformations dues à des mauvaises positions des volailles lors de stockages dans les chambres froides. La position d'arrêt des rouleaux sous les ailes se fait à une distance HA1, HA2, des crochets de suspension et l'entraxe entre les deux palpeurs donne une distance EA1, EA2. Les distances EA1, EA2 et HA1, HA2 sont détectées par des sondes flexibles ou sondes à déplacement analogique (optoflexibles) décrites dans le Brevet français 85.04238. Ces mesures d'informations constituent des points précis de coupe. Elles sont ensuite transmises aux organes de coupes. Un moyen de rappel (26) peut être utilisé entre les plaques (23) pour tendre à leur rapprochement et épouser les formes du torse de la volaille.

Lesdits moyens de contrôle ou définition des paramètres sont combinés avec ceux décrits précédemment. La mesure de chaque volaille est donc parfaitement établie.

Les avantages ressortent bien de la description. En particulier, on souligne :

– le traitement automatique des volailles sans sélection préalable de leur grosseur,

– la découpe précise grâce aux orientations et réglages des scies et à l'immobilisation de la volaille pendant la découpe.

– le rendement intéressant de l'installation, du fait que la cadence n'est limitée que par les possibilités mécaniques des postes ; cette cadence pouvant d'ailleurs être augmentée en allongeant la chaîne pour y intercaler des modules de découpe supplémentaires. La détection de la grosseur des volailles s'opère avant la découpe, cela donne plus de temps aux scies pour se positionner correctement, l'avance de chaque scie se faisant tous les deux pas par exemple.

– la possibilité de modifier, selon les besoins, la chaîne pour insérer d'autres sous-ensembles que la découpe des ailes et des cuisses (pour enlever les filets par exemple) ou de prévoir une disposition différente de l'installation (linéaire, à angle variable...).

**Revendications**

1. Installation de découpe des membre de volailles (V) et animaux similaires du type comprenant un bâti, une chaîne de convoyage (1), sur laquelle sont positionnées lesdites volailles (V), des ensembles de découpe (D1,D2 ; D3,D4) disposés le long de la chaîne de convoyage (1) assurant, selon une programmation prétablie, la découpe successive des ailes puis des cuisses libérant ainsi la carcasse, les ensembles de découpes (D1 - D2) (D3 -D4) comprenant chacun deux moyens de coupe (7) orientés angulairement et de manière symétrique par rapport à un plan, le premier ensemble de découpe (D1 - D2) assurant la découpe des ailes de la volaille, le deuxième ensemble de découpe (D3 - D4) assurant le tranchage de la volaille à l'articulation entre les cuisses, avant-cuisses et la carcasse, l'installation comportant en outre des moyens (15 - 17 - 18) assurant l'évacuation des ailes de la carcasse et des cuisses, disposés en-dessus des postes de découpe : ladite installation étant caractérisée en ce qu'elle comporte des moyens permettant de faire avancer la chaîne de convoyage (1) pas à pas, des palettes à griffes de suspension et de maintien (3) permettant de présenter les volailles en suspension verticale à partir des articulations de leurs membres inférieurs ou cuisses avant cuisses aux différents postes opératoires de découpe de sorte que leur coté ventral soit placé face aux moyens de découpes (D1,D2 ; D3,D4), en ce que ledit plan est perpendiculaire au sens de défilement de la chaîne de convoyage (1), et en ce qu'elle comporte un ou plusieurs moyens de détection (4) disposés sur le bâti de la chaîne de convoyage (1) avant les ensembles de découpes (D1 - D2) (D3 - D4) identifiant l'arrivée de chaque volaille (V), et de mesure identifiant les caractéristiques propres de poids et/ou de volume de chaque volaille, des moyens de transmission pour transmettre les informations desdits moyens de détection et de mesure aux dispositifs de découpes (D1 - D2) (D3 -D4) des ailes et des cuisses des moyens permettant d'adapter, en fonction des informations reçues, la position suivant plusieurs axes des moyens de coupe (7) en égard des parties de la volaille à découper.

2. Installation suivant la revendication 1 caractérisée en ce que les moyens (4) de détection et de mesure identifiant l'amenée et les caractéristiques particulières de la volaille viennent en contact direct sur une ou plusieurs parties du corps de la volaille.

3. Installation suivant la revendication 1 caractérisée en ce que les moyens (4) de détection et de mesure identifiant l'amenée et les caractéristiques particulières de la volaille interviennent sans contact direct avec la volaille, sont du type cellules photoélectriques et similaires, ultrasons...

4. Installation suivant la revendication 2, caractérisée en ce que les moyens (4) de détection et de mesure comprennent une ou plusieurs sondes ou capteurs déformables en position lors du contact direct avec la ou les parties de la volaille, et comportant des moyens pour transmettre la déformation enregistrée étant transmise aux organes de découpe (D1-D2-D3-D4) en vue de leur réglage automatique en position.

5. Installation suivant la revendication 1, caractérisée en ce q'elle comprend un ensemble moteur-frein et système vis-écrou (12) associé à chaque ensemble de découpe (D1-D2) et (D3-D4) et commandé par les informations enregistrées par le ou les moyens (4) de détection de mesure.

6. Installation suivant la revendication 1, caractérisée en ce qu'elle comporte un vérin pneumatique ou électrique double effet (11) qui permet l'avance et le recul des ensembles de découpe (D1-D2) et (D3-D4).

7. Installation suivant la revendication 1, caractérisée en ce que les ensembles de découpes (D1-D2) et (D3-D4) sont orientables angulairement par montage sur un axe (10) et guidés en translation par des guides parallèles (9).

8. Installation suivant la revendication 1 caractérisée en ce que la chaîne de convoyage sans fin (1) est entraînée par un ensemble moteur-réducteur (2) débrayable et à variation de fréquence.

9. Installation suivant la revendication 1, caractérisée en ce qu'un seul moyen (4) de détection et de mesure est disposé au pas précédent la découpe des ailes, et commande le positionnement automatique des ensembles de découpe (D1-D2) des ailes et (D3-D4) des cuisses, ou autres opérations.

10. Installation suivant la revendication 1, caractérisé en ce que au moins deux moyens (4) de détection et de mesure sont disposés chacun au pas précédent chaque ensemble de découpe (D1-D2) et (D3-D4) pour commander séparément ces ensembles.

11. Installation suivant la revendication 1, caractérisée en ce qu'au niveau du poste de découpe des ailes sont prévues des pinces (13) de préhension et d'écartement des ailes et d'immobilisation de la volaille qui sont actionnées par vérins pneumatiques ou électriques orientables (14) simultanément à l'action des ensembles de découpe (D1-D2).

12. Installation suivant la revendication 1 caractérisée en ce qu'entre les ensembles (D1-D2) et (D3-D4) est montée une scie circulaire (16) à hauteur variable, destinée à trancher les pattes dépassant au-dessus des griffes au-dessus des griffes (3) de suspension lorsque les volailles sont disposées sur la chaîne de convoyage (1) sans découpe préalable des pattes.

13. Installation suivant la revendication 1, caractérisée en ce qu'elle comprend des moyens d'évacuation appropriés tels que goulottes (15-17), tapis roulant, convoyeur en vue d'évacuer automatiquement les ailes coupées par les ensembles de découpe (D1-D2) et relâchées par les pinces (13) ainsi que la carcasse tranchée par les ensembles (D3-D4), ainsi qu'un moyen d'évacuation (18) et un éjecteur (19) pour évacuer les cuisses restées accrochées aux griffes.

14. Installation suivant la revendication 1, caractérisée en ce que les griffes (3) de maintien des volailles sont fixées deux par deux sur une disque pivotant solidaire de la chaîne par un axe, afin de présenter la volaille avec son axe ventre/dos dans le sens du déplacement.

15. Installation suivant la revendication 1, caractérisée en ce que les griffes (3) sont articulées, afin de coucher la volaille sur un tapis se déplaçant en même temps que la chaîne sans fin.

16. Installation suivant la revendication 1, caractérisée en ce que l'écartement des palettes à griffes est réglable pour moduler l'écartellement de la volaille en vue d'opérations particulières.

17. Installation suivant la revendication 1, caractérisée en ce que la chaîne sans fin est établie sous la forme d'un anneau applati avec une zone arrière correspondant à la zone du chargement et une zone avant correspondant à la zone de découpe de la volaille.

18. Installation suivant la revendication 1, caractérisé en ce que la chaîne est établie sous une forme linéaire avec éventuellement une ou des directions d'angle variable.

19. Installation suivant la revendication 1, caractérisée en ce que un ou des modules ou sous-ensemble intermédiaires de découpe sont ajoutés dans la chaîne pour réaliser d'autres opération.

20. Installation suivant la revendication 2, caractérisée en ce que les moyens (4) de détection et de mesure comprenant des sondes associées à des couples de rouleaux presseurs (21) (24, 25) susceptibles de se déplacer le long des faces internes des cuisses de la volaille et du torse de celle-ci, avec une certaine pression, en venant en butée en fonction de la résistance offerte par la chair de la volaille à la naissance du croupion et des ailes, la course des rouleaux définie à partir des points d'accrochage et de suspension de la volaille, dans un double plan en hauteur et axial déterminent des paramètres mémorisés et transmis pour l'adaptation de la position des moyens de découpes.

## Patentansprüche

1. Anlage zum Zerschneiden der Glieder von Geflügel (V) und ähnlichen Tieren, in der Ausführung mit einem Kettenförderer (1) auf welchem das besagte Geflügel, von den Gelenken der unteren Glieder desselben, oder Schenkel oder Vorschenkel, aufhänged positioniert wird, und mit am Kettenförderer, entlang vorgesehenen Zerschneidenvorrichtungen, die entsprechend einer vorbestimmten Programmierung das macheinanderfolgende Zerschneiden der Flügel und nachher der Schenkel beim Freimachen des Gerippes bewirken, wobei die genannte Anlage dadurch gekennzeichnet ist, dass das Geflügel (V) gleicher Art ohne vorangehendes Sortieren auf Aufhängungs- und Festhaltenklauenpaletten (3) angehakt wird, die das Präsentieren des Geflügels parallel mit der Bewegungsrichtung der Kette und stirnseitig ermöglichen indem die besagte Kette sich schrittweise vorwärtsbewegt ; die obenerwähnte Anlage weist eine oder mehrere Detektorvorrichtungen (4) auf, die das Eintreffen jedes Tiers und die Abmessungen desselben anzeigen, und die eigentlichen Gewicht- und/oder Ausmassmerkmale jedes einen Tiers identifizieren, wobei die besagte oder die besagten Detektorvorrichtungen gemeinsam mit den Einrichtungen (D1-D2) (D3-D4) zum Zerschneiden der Schenkel, Vorschenkel und desgleichen angeordnet sind, und diese Zerschneideneinrichtunden (D1-D2) (D3-D4) winkelartig und in symmetrischer Weise beiderseitig des Geflügels orientiert sind ; hiebei werden die Informationen der Detektor- und Abmessungsvorrichtungen an die Einrichtungen zum Zerschneiden der Flügel und der Schenkel übermitteln, wobei diese Einrichtungen die Arbeitsstellung gemäss mehreren Achsen der Zerschneidungsmittel (7) in Bezug auf die zu zerschneidenden Geflügelteilen anpassen, und das Zertrennen der Geflügelteile bewirken, mit Mitteln (15-17-18), die für das Ausscheiden der Flügel, des Gerippes und der Schenkel unter den Zerschneidenarbeitsstellen angenracht sind.

2. Anlage gemäss Anspruch 1, dadurch gekennzeichnet, dass die Detektor- und Abmessungsvorrichtungen (4) zum Identifizieren des Ankommens und der besonderen Kennzeichen des Geflügels in unmittelbare Berührung auf einen oder mehrere Teile des Körpers des Tiere gebracht werden.

3. Anlage gemäss Anspruch 1, dadurch gekennzeichnet, dass die Detektor- und Abmessungsvorrichtungen (4) zum Identifizierten des Ankommens und der besonderen Kennzeichen des Geflügels ohne unmittelbare Berührung mit den Tieren wirken, und als elktrische Fotozellvorrichtungen und desgleichen, Ultraschallvorrichtungen usw... ausgeführt sind.

4. Anlage gemäss Anspruch 2, dadurch gekennzeichnet, dass die Detektor- und Abmessungsvorrichtungen (4) eine oder mehrere Sondier- oder Abtasteinrichtungen aufweisen, die bei unmittelbarer Berührung mit dem Teil oder den Teilen der Tiere stellungsmässig verformbar sind, und dass die besagte Anlage auch Vorrichtungen zum Übermitteln der Verformung an die Zerschneidenorgane (D1-D2) (D3-D4) aufweist, damit diese Organe automatisch eingestellt werden.

5. Anlage gemäss Anspruch 1, dadurch gekennzeichnet, dass die besagte Anlage einen aus einem Bremsenmotor und einem Schraube-Mutter-System bestehenden, mit jeder Zerschneidenvorrichtung (D1-D2) und (D3-D4) zusammenwirkenden Komplex (12) aufweist, der durch die durch die Detektor- und Abmessungsvorrichtungen (4) eingetragen Informationen gesteuert wird.

6. Anlage gemäss Anspruch 1, dadurch gekennzeichnet, dass die besagte Anlage einen doppelwirkenden pneumatischen oder elektrischen Druckzylinder (11) aufweist, der die Vorwärts- und Rückärtsbewegung der Zerschneidenvorrichtungen (D1-D2) und (D3-D4) gestattet.

7. Anlage gemäss Anspruch 1, dadurch gekennzeichnet, dass die Zerschneidenvorrichtungen (D1-D2) und (D3-D4), durch Montieren auf eine Achse (10), winkelartig orientiert werden können, und durch parallele Führungen (9) verschiebbar geführt sind.

8. Anlage gemäss Anspruch 1, dadurch gekennzeichnet, dass der endlose Kettenförderer (1) durch einen ausküppelbaren Getriebe-Motor-Komplex (2) mit Frequenzveränderlichkeit mitgenommen wird.

9. Anlage gemäss Anspruch 1, dadurch gekennzeichnet, dass ein einziges Detektor- und Abmessungsmittel (4) an der Förderteilung vor dem Zerschneiden der Flügel angeordnet ist, und die automatische Positionierung der Zerschneidencorrichtungen (D1-D2) für die Flügel und (D3-D4) für die Schenkel oder für andere Verfahren steuert.

10. Anlage gemäss Anspruch 1, dadurch gekennzeichnet, dass an der Förderteilung vor jeder Zerschneidenvorrichtung (D1-D2) und (D3-D4) zwei Detektor- und Abmesungscorrichtungen (4) am wenigstens jeweils angeordnet sind, um die besagten Vorrichtungen getrennt zu steuern.

11. Anlage gemäss Anspruch 1, dadurch gekennzeichnet, dass Zangen (13) zum Fassen und zum Auseinanderspreizen der Flügel, sowie zur Stillegung der Tiere an der Höhe der Zerschneidungsarbeitsstelle für die Flügel vorgesehen sind, wobei diese Zangen mittels pneumatischer oder elektrischer Druckzylinder (14) betätigt werden, die gleichzeitig mit der Wirkung der Zerschneidenvorrichtungen (D1-D2) orientiert werden können.

12. Anlage gemäss Anspruch 1, dadurch gekennzeichnet, dass zwischen den Vorrichtungen (D1-D2) und (D3-D4) eine Kreissäge mit veränderlicher Höhe (16) montiert wird, die für das Zertrennen der Tierfüsse vorgesehen ist, die über den Klauen oberhalb der Aufhängungsklauen (3) hinausragen, wenn das Geflügel ohne vorheriges Zerschneiden der Füsse auf den Kettenförderer (1) angebracht wird.

13. Anlage gemäss Anspruch 1, dadurch gekennzeichnet, dass die besagte Anlage geeignete Entleerungsmittel wie Rinnen (15 - 17), Rollbahn, Förderer zum automatischen Entleeren der durch die Zerschneidenvorrichtungen (D1-D2) abgeschnittenen und von den Zangen (13) losgelassenen Flügel sowie des durch die Vorrichtungen (D3-D4) abgetrennten Gerippes, wobei die Anlage ein Entleerungsmittel (18) und einen Auswerfer (19) zum Entleeren der an den Klauen hängenbleibenden Schenkel auch aufweist.

14. Anlage gemäss Anspruch 1, dadurch gekennzeichnet, dass die Klauen (3) zum Festhalten des Geflügels auf einer verschwenkbaren, mit der Kette mittels einer Achse festgemachten Achse je zu zwei befestigt sind, damit das Geflügel mit dessen Bauch/Rücken-Mittellinie in der Förderrichtung vorgelegt wird.

15. Anlage gemäss Anspruch 1, dadurch gekennzeichnet, dass die Klauen (3) gelenkig sind, damit diese Klauen das Geflügel auf eine Rollbahn niederlegen können, die sich gleichzeitig mit der endlosen Kette bewegt.

16. Anlage gemäss Anspruch 1, dadurch gekennzeichnet, dass das Auseinanderspreizen der Klauenpaletten verstellbar ist, damit das Vierteilen der Tiere zum Zwecke besonderer Behandlungen moduliert werden kann.

17. Anlage gemäss Anspruch 1, dadurch gekennzeichnet, dass die endlose Kette nach der Formgebung eines abreflachten Rings ausgeführt ist, mit einer Hinterzone, die der Beschickungszone entspricht, und einer Vorderzone, die der Zerschneidungszone des Geflügels entspricht.

18. Anlage gemäss Anspruch 1, dadurch gekennzeichnet, dass die Kette nach einer Linearformgebung ausgeführt ist, mit allfällig einer oder mehreren Richtung mit veränderlichem Winkel.

19. Anlage gemäss Anspruch 1, dadurch gekennzeichnet, dass einer, oder mehrere Module oder zwischengeschaltete Zerschneidungskomplexe in der Kette hinzugesetzt werden, um weitere Behandlungen ausführen zu können.

20. Anlage gemäss Anspruch 2, dadurch gekennzeichnet, dass die Detektor- und Abmessungscorrichtungen (4) mit Andruckrollenpaaren (21) (24, 25) zusammenwirkende Sondiervorrichtungen aufweisen, die an den Innenflächen der Schenkel der Tiere und deren Rumpf bei Ausüben eines gewissen Drucks entlang verschoben werden können, und die entsprechend dem durch das Flesch des Geflügels am Entstehenpunkt der Flügel und des Hinterteils erzeugten Widerstand zum Abstützen kommen, wobei der von den Einhaken- und Aufhängungsstellen für das Geflügel aus, in einer Doppelebene in der Höhe und in der Achsialrichtung bestimmte Laufgang der Rollen die aufgespeicherten und übermittelten Parameter für das Anpassen der Einstellung der Zerschneidungsmittel festsetzt.

## Claims

1. Installation for carving the limbs of fowl (V) or similar animals, of the type including a conveyor chain (1) on which said fowl is positioned by hanging from the articulations of their lower limbs or thighs, forethighs, the carving in sucession of the wings and then of the thighs being provided in accordance with a pre-established programming by cutting means disposed along the conveyor chain, the carcass being disengaged thereby, and said installation being characterized in that fowls (V) of the same species are hooked up without prior sorting on claw palettes (3) for hanging up and holding the animals while permitting them to be presented parallel to the direction of the onward movement of the chain and frontally, said chain moving forward step by step, the installation comprising one or more sensing means (4) for the detection of the arrival of each animal and for the measurement thereof, identifying the individual characteristics of weight and/of or volume for each animal, said means being disposed together with the carving unit or units (D1-D2) (D3-D4) for the wings, the thighs, the forethighs and the like, the carving units (D1-D2), (D3-D4) being directed angularly and symmetrically on either side of the fowl, said sensing and measuring means conveying their data to the carving devices for the wings and the thighs, these devices adapting their position in accordance with a plurality of axes of the carving means (7) taking into account the portions of the animal to be carved, the fowl portions being sliced up by said cutting means, and means (15 - 17 - 18) for taking off the wings and the thighs off the carcass being disposed beneath the cutting stations.

2. Installation as claimed in Claim 1, characterized in that the detection and measurement means (4) for identifying the arrival and the particular characteristics of the fowl are brought into direct contact with one or more portions of the body of the animal.

3. Installation as claimed in Claim 1, characterized in that the detection and measurement means (4) for identifying the arrival and the particular characteristics of the fowl operate without direct contact with the animals, and are of the photo-electric type or the like, or ultra-sonic means...

4. Installation as claimed in Claim 2, characterized in that the detection and measurement means include one or more positionally deformable probes or sensors which can be deformed when contacting directly the portion or the portions of the animals, and are provided with means for conveying the deformation data to be communicated to the carving organs (D1-D2) D3-D4) for the automatic positional adjustement thereof.

5. Installation as claimed in Claim 1, characterized in that said installation includes an assembly of brake-motor and nut-bolt system (12) associated with each carving unit (D1-D2) and (D3-D4), and controlled by the information registered by the detection and measurement means (4).

6. Installation as claimed in Claim 1, characterized in that said installation includes a double acting air or electrical pressure cylinder (11) permitting the forward and backward motion of the carving units (D1 - D2) and (D3 - D4).

7. Installation as claimed in Claim 1, characterized in that the carving units (D1 - D2) and (D3 - D4) can be oriented angularly by mounting on a shaft (10) and guided in translation by parallel guides (9).

8. Installation as claimed in Claim 1, characterized in that the endless conveyor chain or belt (1) is driven by means of a disengageable gear motor unit (2) with varying frequency.

9. Installation as claimed in Claim 1, characterized in that one only sensing and measuring device (4) is provided at the step of wing carving, and controls the automatic positioning of the carving units (D1-D2) for the wings and (D3-D4) for the thighs, or for other operations.

10. Installation as claimed in Claim 1, characterized in that two detection and measuring means (4) at least are are provided each one at the step preceding each carwing unit (D1-D2) and (D3-D4), in order to control these units separately.

11. Installation as claimed in Claim 1, characterized in that at the level of the wing carving station are provided pincers (13) for gripping and spacing away the wings and immobilizing the fowl, which are actuated by air or electrical pressure cylinders (14) which can be oriented at the same time as the action of the carving units (D1-D2).

12. Installation as claimed in Claim 1, characterized in that a circular saw (16) is mounted between the units (D1-D2) and (D3-D4), said saw being vertically adjustable and intended for severing the feet projecting above the claws of suspension (3) when the animals are disposed on the conveyor chain (1) without prior carving of the feet.

13. Installation as claimed in Claim 1, characterized in that said installation includes suitable discharge means such as chutes (15 - 17), travelling belt or band, conveyor, for discharging automatically the wings carved off by the carving units (D1-D2) and released by pincers (13) as well as the carcass severed by the carving units (D3-D4), and includes also a discharge means (18) and an ejector (19) for the discharge of the thighs remaining in a hooked on condition on the claws.

14. Installation as claimed in Claim 1, characterized in that the fowl holding claws (3) are secured two by two to a swinging disk associated with the chain by means of a chain, so that the fowl will be presented with the back/abdomen axis thereof in the direction of the movement.

15. Installation as claimed in Claim 1, characterized in that the claws (3) are hinged, in order to be able to lay on the fowl on a belt or band moving along at the same time as the endless chain.

16. Installation as claimed in Claim 1, characterized in that the spacing between the claw palettes is adjustable, in order to modulate the quartering of the fowl in view of special operations.

17. Installation as claimed in Claim 1, characterized in that the endless chain is in the form of a flattened ring with a rear zone corresponding to the loading area and a front zone corresponding to the fowl carving area.

18. Installation as claimed in Claim 1, characterized in that the chain is in a linear form, and as the case may be with one or more varying angle directions.

19. Installation as claimed in Claim 1, characterized in that one or more of the modules or intermediate carving sub-assemblies are added in the chain for the purpose of carrying out their operations.

20. Installation as claimed in Claim 2, characterized in that the detection and measurement means (4) include various probes associated with pairs of pressure rollers (21), (24, 25) which can be moved along the inside faces of the thighs and the trunk of the animals under a certain pressure, while being abutted in accordance with the resistance exerted by the flesh of the fowl at the root of the rump and the wings, the travel of the rollers being established from the fowl hooking and suspension points in a double plane vertically and axially, providing thus the determination of stored and conveyed parameters for adapting the position of the carving means.

FIG.1

FIG.2

FIG.3

FIG.4

FIG.5

FIG.6

FIG.7

FIG.8

FIG.9

FIG.10

FIG.11

FIG.12

FIG.13

FIG.14

13